# EUROPÄISCHE PATENTANMELDUNG

(11) **EP 3 144 203 A1**
(43) Veröffentlichungstag der Anmeldung: **22.03.2017**
(21) Anmeldenummer: 15185863.6
(22) Anmeldetag: 18.09.2015
(51) Int. Cl.: B62B 3/00, B62B 3/10

(54) **TRANSPORTWAGEN FÜR REINIGUNGSUTENSILIEN**

(71) Anmelder: VERMOP Salmon GmbH, 82205 Gilching (DE)
(72) Erfinder: SALMON, Dirk, 82205 Gilching (DE)
(74) Vertreter: Hoffmann Eitle

(57) **Zusammenfassung**

Ein Transportwagen für Reinigungsutensilien umfasst ein Fahrgestell (17) mit mehreren Rädern (16) sowie einen kastenförmigen Aufbau (23) mit einem Rahmengestell (22) und mit Aufnahmeräumen (1) zur Unterbringung von Reinigungsutensilien oder Zubehörteilen. Der Transportwagen umfasst weiterhin eine mittels einer im Wesentlichen horizontalen Verschiebebewegung manuell in einen und aus einem der Aufnahmeräume (1) des kastenförmigen Aufbaus (23) bewegbare Befestigungsplatte (2), an deren mindestens einer Hauptfläche Befestigungselemente (3, 5, 7) zur Anbringung Reinigungsutensilien oder Zubehörteilen angeordnet sind.

## Beschreibung

### GEBIET DER ERFINDUNG

Die Erfindung betrifft einen Transportwagen für Reinigungsutensilien mit einem Fahrgestell mit mehreren Rädern sowie einem kastenförmigen Aufbau mit einem Rahmengestell und mit Aufnahmeräumen zur Unterbringung von Zubehörteilen.

### STAND DER TECHNIK

Transportwägen für Reinigungsutensilien werden bei der Reinigung großflächiger Objekte eingesetzt und sind in verschiedenen Ausführungsformen bekannt. In der Regel bestehen derartige Transportwägen aus einer Plattform, an der zwei oder vier Räder befestigt sind. Auf der Plattform werden verschiedene vom Reinigungspersonal benötigte Reinigungsutensilien angeordnet, wobei häufig spezielle Halterungen für die für den jeweiligen Reinigungseinsatz notwendigen Gerätschaften vorgesehen sind.

Aus der EP 0 878 374 A2 ist ein Transportwagen für Reinigungsgegenstände bekannt, mit einer auf vier Rädern getragenen Plattform, sowie einem auf der Plattform aufgebauten Gestell. Reinigungswägen mit einem Fahrgestell, welches mit unterschiedlichen Aufbauten bestückt war sind, sind zum Beispiel auch aus der EP 0 801 925 B1 bekannt. Auch der aus der US 4,869,518 bekannte Transportwagen für Reinigungsutensilien weist zwei Räder und eine Plattform auf, die fest mit einem Gestell verbunden ist, an dem sich Halterungen für Reinigungsutensilien sowie ein Abfallbeutel befinden.

Im Reinigungsgewerbe besteht ein zunehmendes Bedürfnis nach kompakten Transportwägen, die stärker an Kundenerfordernisse angepasst werden können.

### DARSTELLUNG DER ERFINDUNG

Der Erfindung liegt die Aufgabe zu Grunde, einen Transportwagen für Reinigungsutensilien zu schaffen, der auf einfache Weise Zugang zu Reinigungsutensilien für unterschiedlichste Einsatzspektren ermöglicht.

Diese Aufgabe wird durch einen Transportwagen für Reinigungsutensilien mit den Merkmalen des Anspruchs 1 gelöst. Bevorzugte Ausführungsformen folgen aus den übrigen Ansprüchen.

Der erfindungsgemäße Transportwagen für Reinigungsutensilien umfasst ein Fahrgestell mit mehreren Rädern, von denen vorzugsweise mehrere Räder um eine vertikale Achse schwenkbar sind, sowie einen kastenförmigen Aufbau mit einem Rahmengestell und mit Aufnahmeräumen zur Unterbringung von Zubehörteilen. Der Transportwagen umfasst weiterhin eine mittels einer im Wesentlichen horizontalen Verschiebebewegung manuell in einen und aus einem der Aufnahmeräume des kastenförmigen Aufbaus bewegbare Befestigungsplatte, an deren mindestens einer Hauptfläche Befestigungselemente zur Anbringung von Reinigungsutensilien angeordnet sind.

Das Vorsehen einer Befestigungsplatte, die mittels einer horizontalen Verschiebebewegung aus dem kastenförmigen Aufbau des Transportwagens heraus gezogen werden kann, bietet einerseits einen bequemen Zugang zu den an der Befestigungsplatte angeordneten Reinigungsutensilien oder Zubehörteilen und ermöglicht andererseits auch die variable Anpassung der Befestigungsplatte an die Anbringung von Reinigungsutensilien, die je nach dem konkreten Anwendungszweck unterschiedlich sein können.

Der Vorteil der Erfindung besteht darin, dass die Arbeitsgeräte sichtbar an zugeordneten Stellen befestigt sind. Anders als beim Vorsehen von Stauräumen, in denen sich die Reinigungsutensilien ungeordnet befinden, kann der achtsame Umgang des Reinigungspersonals mit den Arbeitsgeräten sowie die Vollständigkeit der ausgehändigten Reinigungsutensilien jederzeit bequem überprüft werden.

Nach einer bevorzugten Ausführungsform der Erfindung sind an beiden Hauptflächen der Befestigungsplatte Befestigungselemente zur Anbringung von Reinigungsutensilien angeordnet. Auf diese Weise kann eine größere Anzahl individueller Reinigungsutensilien an gesondert hierfür vorgesehenen Positionen aufbewahrt werden.

Vorzugsweise umfasst der Transportwagen weiterhin eine Aufnahmegeometrie zur Halterung einer vertikal angeordneten, teleskopartig ausziehbaren Handhabe. Das Vorsehen einer teleskopartig ausziehbaren Handhabe spart Platz und ermöglicht es dem Reinigungspersonal, einen variabel mit unterschiedlichen Reinigungsutensilien koppelbaren Griff an einer gesondert hierfür vorgesehenen Position am Transportwagen mitzuführen.

Das Vorsehen einer teleskopartig ausziehbaren Handhabe spart Platz. Die hierzu beispielhaft dargestellte Handhabe verfügt außerdem über eine Kopplungsaufnahme, an die die unterschiedlichen Reinigungsutensilien gekoppelt werden.

Vorzugsweise ist an der Stirnseite der Befestigungsplatte eine senkrecht zur Erstreckung der Befestigungsplatte angeordnete Abdeckung angebracht, die bei in den Aufnahmeraum des kastenförmigen Aufbaus eingeschobener Befestigungsplatte im Wesentlichen bündig ist mit der Außengeometrie des kastenförmigen Aufbaus. Auf diese Weise kann die Befestigungsplatte wie eine vertikal angeordnete Schublade in den kastenförmigen Aufbau eingeschoben werden. Weiterhin lässt sich durch die bündig mit der Außengeometrie des kastenförmigen Aufbaus angeordnete Abdeckung eine gute optische Erscheinung des Transportwagens herstellen.

Vorzugsweise umfasst der Transportwagen weiterhin eine Aussparung in einem oberseitigen Abschlusselement des kastenförmigen Aufbaus, wobei sich die Aussparung in demjenigen Bereich befindet, die sich bei in den Aufnahmeraum des kastenförmigen Aufbaus eingeschobener Befestigungsplatte vertikal über der Aufnahmegeometrie zur vertikalen Halterung einer teleskopartig ausziehbaren Handhabe befindet. Auf diese Weise kann die vertikal angeordnete Handhabe über das oberseitige Abschlusselement hinaus nach oben ragen, und es können auch Handhaben von größerer Länge mit dem erfindungsgemäßen Transportwagen mitgeführt werden. Wenn die Handhabe über das oberseitige Abschlusselement nach oben ragt, kann zudem die Handhabe dazu verwendet werden, die Befestigungsplatte aus dem Aufnahmeraum des kastenförmigen Aufbaus zu ziehen.

Um die Befestigungsplatte mittels einer horizontalen Verschiebebewegung manuell aus dem Aufnahmeraum des kastenförmigen Aufbaus herausziehen zu können, sind vorzugsweise ein oder mehrere Teleskopauszüge vorgesehen, oder in Schienen laufende Auszüge, die an der Befestigungsplatte angebracht sind.

Vorzugsweise weist der Transportwagen weiterhin einen abschließbaren Bereich für nicht zugänglich aufzubewahrende Reinigungschemikalien auf, der vorzugsweise über dem Bereich des kastenförmigen Aufbaus angeordnet ist, in dem sich der Aufnahmeraum für die Befestigungsplatte befindet. Auf diese Weise lässt sich eine kompakte Bauform des gesamten Reinigungswagens verwirklichen.

### KURZE BESCHREIBUNG DER ZEICHNUNGEN

In den nachfolgenden Zeichnungen wird die Erfindung rein beispielhaft beschrieben. Dabei zeigen:
- Fig. 1: eine schematische Darstellung des erfindungsgemäßen Reinigungswagens mit ausgezogener Befestigungsplatte; und
- Fig. 2: eine schematische Darstellung des erfindungsgemäßen Reinigungswagens mit eingeschobener Befestigungsplatte.

### DARSTELLUNG BEVORZUGTER AUSFÜHRUNGSFORMEN

In der nachfolgenden Beschreibung und in den Figuren werden zur Vermeidung von Wiederholungen gleiche Bauteile und Komponenten auch mit gleichen Bezugszeichen bezeichnet. In der gesamten Beschreibung beziehen sich Bezugnahmen auf geometrische Richtungen, wie "horizontal" oder "oben" auf einen Reinigungswagen, der mit den Rädern auf einer ebenen Fläche steht.

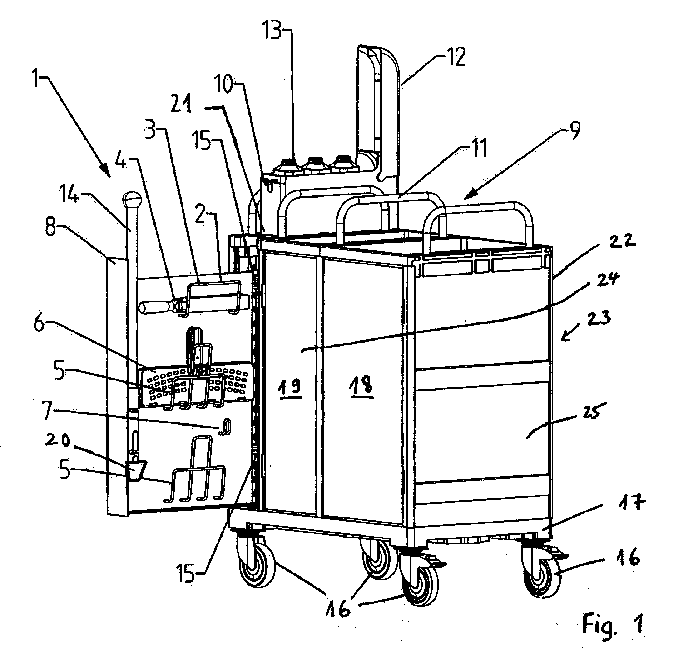

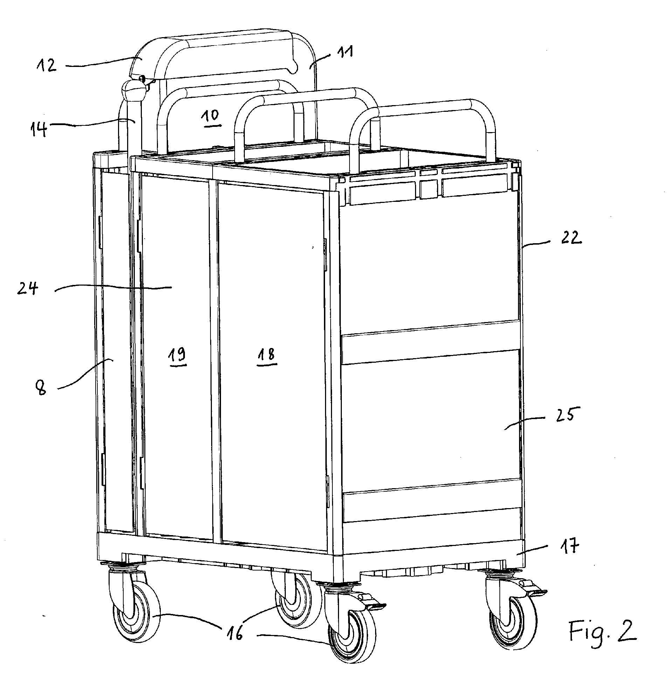

In der Figur 1 ist eine schematische perspektivische Ansicht eines erfindungsgemäßen Reinigungswagens dargestellt. Der Reinigungswagen 1 weist ein Fahrgestell 17 auf, das vier Räder 16 besitzt, von denen mehrere Räder oder auch sämtliche Räder relativ zum Fahrgestell um eine vertikale Achse drehbar sind. Dies erhöht die Manövrierfähigkeit des Transportwagens. Der in Figur 1 dargestellte Transportwagen ist exemplarisch zu verstehen, was die Geometrie des kastenförmigen Aufbaus 23 und die gesamte Unterteilung des kastenförmigen Aufbaus mithilfe eines Rahmengestells 22 betrifft. So sind im Ausführungsbeispiel nach den Figuren 1 und 2 drei unterschiedliche Aufnahmeräume 1, 24, 25 vorgesehen, von denen zwei Aufnahmeräume 24, 25 durch die um eine vertikale Achse schwenkbare Türen 18 und 19 verschließbar sind. Auf diese beiden Aufnahmeräume 24, 25 wird im Folgenden nicht weiter eingegangen, da es bei dem erfindungsgemäßen Transportwagen auf den allgemein mit Referenzziffer 1 bezeichneten Aufnahmeraum und dessen Einbauten ankommt. Im Aufnahmeraum 1 des Transportwagens befindet sich eine Befestigungsplatte 2, die mittels Teleskopauszügen 15 in den Aufnahmeraum des Transportwagens hinein und aus diesem herausgezogen werden kann. Dies erfolgt mithilfe einer manuellen, horizontalen Verschiebebewegung. Die Teleskopauszüge 15 sind dabei so dimensioniert, dass die Befestigungsplatte weitestgehend aus dem Aufnahmeraum herausgezogen werden kann, sodass ein Benutzer bequemen Zugang zu den an der Befestigungsplatte angebrachten Reinigungsutensilien hat.

An der raumseitigen Stirnfläche der Befestigungsplatte ist die Abdeckung 8 befestigt, die eine plattenförmige Geometrie aufweist, sich im Wesentlichen in vertikaler Richtung erstreckt und deren Hauptflächen senkrecht zu den Hauptflächen der Befestigungsplatte angeordnet sind. Auf diese Weise ergibt sich eine Gesamtgeometrie ähnlich einer vertikal angeordneten Schublade, deren "Boden" die Befestigungsplatte 2 ist und deren stirnseitige Abschlussblende die Abdeckung 8 ist.

In der Figur 1 sind exemplarisch verschiedene Halter 3, 5 und 7 dargestellt, die an der Befestigungsplatte 2 angebracht sind und der Aufnahme bestimmter Reinigungsutensilien dienen. Um eine möglichst variable Befestigung der Halter an der Reinigungsplatte zu ermöglichen, kann die Reinigungsplatte mit einem Lochraster versehen sein, das die Anbringung unterschiedlich geformte Halter an beliebigen Positionen der Reinigungsplatte erlaubt. In der Figur 1 ist zudem nur die den Betrachter zugewandte Hauptfläche der Befestigungsplatte 2 dargestellt. Die entgegengesetzte, zweite Hauptfläche der Befestigungsplatte kann auch zur Anbringung von Reinigungsutensilien verwendet werden, sofern die Geometrie der Teleskopauszüge 15 und deren Befestigung an der Befestigungsplatte 2 ausreichend Raum hierfür schaffen.

Im Ausführungsbeispiel nach Figur 1 sind exemplarisch unterschiedliche Reinigungsgeräte an der Befestigungsplatte gehalten. Es handelt sich dabei um ein Wand- und Deckenputzgerät 4 und ein Bodenwischgerät 6. Je nach der Geometrie der Reinigungsgeräte und sonstigen Erfordernissen sind die zugehörigen Halter 3, 5, 7 geformt und angeordnet.

Ebenfalls an der Befestigungsplatte 2 befestigt ist eine teleskopartig ausziehbare Handhabe 14, die als universelle Handhabe gestaltet ist und mit den unterschiedlichen Reinigungsutensilien koppelbar ist. Die Handhabe 14 wird dabei vertikal aufbewahrt, indem sie in einen Aufnahmeschuh 20 eingesteckt wird. Der Aufnahmeschuh ist dabei in unmittelbarer Nähe zur Abdeckung 8 angeordnet, wodurch die Handhabe 14 nur durch den Aufnahmeschuh 20 gehalten werden kann, weil die Handhabe 14 sowohl an der Befestigungsplatte 2 als auch der Abdeckung 8 anliegt.

Der Aufnahmeschuh 20 ist trichterförmig ausgeführt und erleichtert dadurch die Positionierung der Handhabe 20.

Wie aus Figur 1 ersichtlich ist, erstreckt sich die Handhabe 14 über das obere Ende der Abdeckung 8 hinaus. Dies ist dadurch möglich, dass eine Aussparung 21 in dem oberseitigen Abschlusselement vorgesehen ist, das sich in demjenigen Bereich befindet, der sich bei in den Aufnahmeraum 1 des kastenförmigen Aufbaus eingeschobener Befestigungsplatte 2 im Bereich der Handhabe 14 befindet. Auf diese Weise kann die Abdeckung 8, wie in Figur 2 dargestellt, vollständig geschlossen werden, so dass sie mit den Türen 18 und 19 fluchtet, während das obere Ende der Handhabe 14 nach oben aus dem Aufnahmeraum 1 vorsteht. Wenn die Handhabe 14, wie Figur 2 dargestellt ist, nach oben aus dem Aufnahmeraum vorsteht, kann die Handhabe sogar auf eine bequeme Weise durch den Bediener gegriffen werden, um die Befestigungsplatte 2 aus dem Aufnahmeraum 1 herauszuziehen.

Oberhalb des Aufnahmeraums 1 kann ein sogenanntes Chemiecenter 10 vorgesehen sein, das aus einem Unterteil 11 sowie einem Oberteil 12 besteht. In Chemiecenter befinden sich Reinigungschemikalien. Um unberechtigten Personen den Zugang zu den Reinigungschemikalien zu verwehren, ist das Oberteil 12 verschließbar mit dem Unterteil verbunden.

Der erfindungsgemäße Reinigungswagen bietet einen bequemen Zugang zu individuellen Reinigungsgeräten, mit denen der Reinigungswagen je nach dem Reinigungsauftrag bestückt werden kann. Die einzelnen Reinigungsutensilien sind stets an der vorgesehenen Stelle angebracht, wodurch sich die Vollständigkeit der mitgeführten Reinigungsutensilien einfach kontrollieren lässt. Die Unterbringung der zusätzlichen Reinigungsutensilien an der in horizontaler Richtung ausziehbaren Befestigungsplatte ermöglicht eine platzsparende Unterbringung im Reinigungswagen, die auf diese Weise trotz der Mitführung zahlreicher Reinigungsgeräte kompakt gestaltet werden. Dies gilt in besonderer Weise auch bei der Mitführung einer Handhabe, die einerseits variabel mit unterschiedlichen Reinigungsköpfen kombiniert werden kann, und andererseits aufgrund der teleskopartigen Verlängerung platzsparend untergebracht werden kann und ebenfalls einen wichtigen Beitrag zur Herstellung eines Reinigungswagens mit kompakten Abmessungen leistet.

## Patentansprüche

1. Transportwagen für Reinigungsutensilien, umfassend:
- ein Fahrgestell (17) mit mehreren Rädern (16);
- einen kastenförmigen Aufbau mit einem Rahmengestell (22) und mit Aufnahmeräumen (1, 24, 25) zur Unterbringung von Reinigungsutensilien oder Zubehörteilen;
weiter umfassend:
eine mittels einer im wesentlichen horizontalen Verschiebebewegung manuell in einen und aus einem der Aufnahmeräume (1) des kastenförmigen Aufbaus (23) bewegbare Befestigungsplatte (2), an deren mindestens einer Hauptfläche Befestigungselemente (3, 5, 7) zur Anbringung Reinigungsutensilien oder Zubehörteilen angeordnet sind.

2. Transportwagen nach Anspruch 1, **dadurch gekennzeichnet, dass** an beiden Hauptflächen der Befestigungsplatte (2) Befestigungselemente (3, 5, 7) zur Anbringung von Reinigungsutensilien oder Zubehörteilen angeordnet sind.

3. Transportwagen nach Anspruch 1 oder 2, weiterhin umfassend:
eine Aufnahmegeometrie (20) zur Halterung einer vertikal angeordneten, teleskopartig ausziehbaren Handhabe (14).

4. Transportwagen nach Anspruch 3,
**dadurch gekennzeichnet, dass**
an der Stirnseite der Befestigungsplatte (2) eine im Wesentlichen senkrecht zur Erstreckung der Befestigungsplatte (2) angeordnete Abdeckung (8) angebracht ist, die bei in den Aufnahmeraum (1) des kastenförmigen Aufbaus (23) eingeschobener Befestigungsplatte (2) im Wesentlichen bündig ist mit der Außengeometrie des kastenförmigen Aufbaus (23).

5. Transportwagen nach Anspruch 4, weiterhin umfassend:
eine Aussparung (21) in einem oberseitigen Abschlusselement des kastenförmigen Aufbaus (23), wobei sich die Aussparung (21) in demjenigen Bereich befindet, der sich bei in den Aufnahmeraum (1) des kastenförmigen Aufbaus (23) eingeschobener Befestigungsplatte (2) vertikal über der Aufnahmegeometrie (20) zur vertikalen Halterung einer teleskopartig ausziehbare Handhabe (14) befindet.

6. Transportwagen nach einem der vorhergehenden Ansprüche, weiterhin umfassend:
mehrere Teleskopauszüge (15), die an der Befestigungsplatte (2) angebracht sind.

7. Transportwagen nach einem der vorhergehenden Ansprüche, weiterhin umfassend:
einen abschließbaren Bereich für nicht zugänglich aufzubewahrende Reinigungschemikalien (13), der vorzugsweise über den Bereich des kastenförmigen Aufbaus angeordnet ist, in dem sich der Aufnahmeraum (1) für die Befestigungsplatte (2) befindet.
